# EUROPÄISCHE PATENTANMELDUNG

(11) **EP 4 446 599 A2**
(43) Veröffentlichungstag der Anmeldung: **16.10.2024**
(21) Anmeldenummer: 24197261.1
(22) Anmeldetag: 27.05.2021
(51) Int. Cl.: F16B 21/04

(54) **FÖRDERVORRICHTUNG ZUM TRANSPORT VON STÜCKGUT**

(30) Priorität: 28.05.2020 AT 504662020
(62) Teilanmeldung aus: 21732169.4
(71) Anmelder: TGW Mechanics GmbH, 4600 Wels (AT)
(72) Erfinder: LINDORFER, Stefan, 4122 Arnreit (AT); SCHÖNBAUER, Manuel, 4715 Taufkirchen an der Trattnach (AT); LEEB, Clemens, 4611 Buchkirchen (AT)
(74) Vertreter: Burger, Hannes Alfred

(57) **Zusammenfassung**

Die Erfindung betrifft eine Fördervorrichtung (1) zum Transport von Stückgut, umfassend eine Vielzahl von Rahmenprofilen (3a, 3b), ein Förderelement (5) und eine Vielzahl von Seitenführungsprofilen (4a, 4b). Ein erstes Rahmenprofil (3a) und ein zweites Rahmenprofil (3b) verlaufen mit gegenseitigem Abstand parallel zueinander und in Förderrichtung des Stückguts. Das Förderelement ist zwischen dem ersten Rahmenprofil und dem zweiten Rahmenprofil angeordnet. Ein erstes Seitenführungsprofil (4a) ist am ersten Rahmenprofil und ein zweites Seitenführungsprofil (4b) am zweiten Rahmenprofil jeweils über eine Vielzahl von Seitenführungshalterungen (6') montiert. Ein Sensor (10) ist am ersten Rahmenprofil oder am ersten Seitenführungsprofil befestigt. Das erste Seitenführungsprofil weist eine erste Durchgangsöffnung (38) auf, durch welche ein abgestrahlter Lichtstrahl in den Förderbereich führbar ist und welche eine sensorseitige Lochblende für den abgestrahlten Lichtstrahl bereitstellt.

## Beschreibung

Die Erfindung betrifft eine Fördervorrichtung zum Transport von Stückgut gemäß Anspruch 1.

Aus dem Stand der Technik sind Fördervorrichtungen bekannt, bei welchen eine Lichtschranke zur Detektion von Stückgut in einem Förderbereich vorgesehen ist. Hierbei wird das Stückgut dann detektiert, wenn ein Lichtstrahl der Lichtschranke durch das Stückgut unterbrochen und somit nicht auf einem Lichtempfänger der Lichtschranke auftrifft.

Normalerweise weisen derartige Fördervorrichtungen zwei gegenüberliegende und den Förderbereich seitlich begrenzende Seitenführungsprofile auf, welche jeweils an einem Rahmenprofil befestigt sind. Um einen Lichtstrahl der Lichtschranke in den Förderbereich zu führen, ist üblicherweise ein Spalt zwischen dem Seitenführungsprofil und dem Rahmenprofil vorgesehen.

Nachteilig ist hierbei, dass sich besonderes Stückgut, insbesondere in sogenannten Polybags verpackte Artikel, im Spalt verfangen können, wodurch eine Transportleistung der Fördervorrichtung beeinträchtigt ist. Überdies kann es zu einer Beschädigung des Artikels kommen.

Um diesen Nachteil zu überwinden, ist es aus dem Stand der Technik bekannt, dass das Seitenführungsprofil unmittelbar an das Rahmenprofil anschließt. Damit ein Lichtstrahl der Lichtschranke in den Förderbereich geführt werden kann, ist das Seitenführungsprofil gestückelt ausgebildet, wobei spezielle Verbindungsstücke mit einer passenden Aussparung für den Sensor zwischen zwei aufeinanderfolgende Teilstücke des Seitenführungsprofils eingefügt sind. Die Montage einer derartigen Fördervorrichtung gestaltet sich somit kompliziert und aufwändig.

Die EP 2 103 555 A1 offenbart eine Fördervorrichtung zum Transport von Stückgut gemäß dem Oberbegriff des Anspruchs 1. Die Fördervorrichtung umfasst eine Vielzahl von Rahmenprofilen, zumindest ein Förderelement und eine Vielzahl von Seitenführungsprofilen, wobei ein erstes Rahmenprofil und ein zweites Rahmenprofil mit gegenseitigem Abstand parallel zueinander und in Förderrichtung des Stückguts verlaufen, und wobei das Förderelement zwischen dem ersten Rahmenprofil und dem zweiten Rahmenprofil angeordnet ist und eine Förderebene definiert, auf welcher das Stückgut transportiert werden kann, und wobei ein erstes Seitenführungsprofil und ein zweites Seitenführungsprofil mit gegenseitigem Abstand parallel zueinander und in Förderrichtung des Stückguts verlaufen, und wobei das erste Seitenführungsprofil am ersten Rahmenprofil und das zweite Seitenführungsprofil am zweiten Rahmenprofil jeweils über eine Vielzahl von Seitenführungshalterungen montiert sind, sodass ein Förderbereich seitlich durch das erste Seitenführungsprofil und das zweite Seitenführungsprofil begrenzt ist, und wobei ein Sensor am ersten Rahmenprofil oder am ersten Seitenführungsprofil befestigt ist, welcher eine Lichtquelle zur Bereitstellung eines abgestrahlten Lichtstrahls aufweist.

Aufgabe der Erfindung ist es, eine Fördervorrichtung der eingangs genannten Art anzugeben, mit welcher beliebiges Stückgut transportiert und zuverlässig detektiert werden kann.

Die Aufgabe der Erfindung wird durch die Merkmale des Anspruchs 1 gelöst.

Der Sensor kann hinter dem Seitenführungsprofil bzw. auf einer vom Förderbereich abgewandten Seite des Seitenführungsprofils, nämlich der Montageseite, positioniert werden, wobei der abgestrahlte Lichtstrahl durch die Durchgangsöffnung in den Förderbereich geführt wird.

Ein mit der Erfindung erzielter Vorteil kann somit darin gesehen werden, dass der Sensor sehr platzsparend positioniert werden kann. Ferner wird der Sensor auf einer dem zwischen dem ersten Seitenführungsprofil und dem zweiten Seitenführungsprofil liegenden Förderbereich abgewandten Seite des ersten Seitenführungsprofils bzw. zweiten Seitenführungsprofils angeordnet und kann derart montiert werden, ohne das Seitenführungsprofil zu unterbrechen. Dadurch wird ermöglicht, dass das erste bzw. zweite Seitenführungsprofil mit einem geringeren Vertikalabstand zum Rahmenprofil, vorzugsweise unmittelbar an das Rahmenprofil anschließend montierbar ist, sodass die Fördervorrichtung für den Transport von beliebigem Stückgut geeignet ist, insbesondere von Artikel, welche in Plastiksäcken bzw. Polybags verpackt sind. Das erste Seitenführungsprofil und/oder das zweite Seitenführungsprofil können hierfür eine Schürze aufweisen, welche eine zum Förderbereich gerichtete Führungsfläche des Seitenführungsprofils vergrößert bzw. sich bis unterhalb der Förderebene verlängert und einen Spalt zwischen dem Seitenführungsprofil und dem Rahmenprofil schließt. Hierbei kann die Schürze die Lochblende umfassen. Mit der Lochblende wird ein Sendekegelwinkel des abgestrahlten Lichtstrahls beschränkt, wodurch eine Sensitivität des Sensors erhöht werden kann. Auf diese Weise können wesentlich kostengünstigere Sensoren eingesetzt werden, deren Lichtquellen bzw. Lichtsender in der Regel ein besonders divergentes Lichtbündel bereitstellen, da durch den beschränkten Sendekegelwinkel eine durch das divergente Lichtbündel verursachte Mess- bzw. Detektionsungenauigkeit im Wesentlichen kompensiert werden kann.

Der oder die Sensoren können mittels einer ersten Ausführung einer Sensorhalterung mit einer Verbindungsvorrichtung am ersten Rahmenprofil der Fördervorrichtung montiert sein. Die Verbindungsvorrichtung umfasst eine nachfolgend beschriebene Anbindungsanordnung und einen mit dieser zusammenwirkenden Montageschenkel, welcher am ersten Rahmenprofil angeordnet ist und eine Vielzahl von in Längsrichtung des Montageschenkels beabstandet zueinander angeordneter Ausnehmungen aufweist. Alternativ können der oder die Sensoren mittels einer zweiten Ausführung einer Sensorhalterung, welche seitlich an einem der Rahmenprofile befestigbar bzw. seitlich mit dem Rahmenprofil verschraubbar ist, montiert sein.

Alternativ können der oder die Sensoren mittels einer dritten Ausführung einer Sensorhalterung am ersten Seitenführungsprofil befestigt sein. Hierfür weist diese Sensorhalterung ein Befestigungsmittel, insbesondere ein Klemmmittel, auf, welches mit einer Befestigungsnut des Seitenführungsprofils zusammenwirkt, um diese Sensorhalterung am Seitenführungsprofil zu befestigen. Das Befestigungsmittel kann im Wesentlichen analog zum Montageabschnitt der zuvor beschriebenen Seitenführungshalterung ausgebildet sein.

Ferner kann diese Sensorhalterung ein Außengehäuse, ein Innengehäuse und gegebenenfalls eine Verstellvorrichtung aufweisen, welche im Wesentlichen analog zum Außengehäuse, zum Innengehäuse und gegebenenfalls zur Verstellvorrichtung der nachfolgend beschriebenen Sensorhalterung ausgebildet sind. Nach dieser Ausführung ist das Innengehäuse schwenkbar am Außengehäuse gelagert, wobei eine Neigung des Innengehäuses mittels einer Verstellvorrichtung einstellbar ist. Dadurch wird eine Einstellbarkeit eines vom abgestrahlten Lichtstrahl und der Förderebene eingeschlossenen Winkels ermöglicht. Zur schwenkbaren Lagerung kann das Außengehäuse in der ersten Seitenwandung und der zweiten Seitenwandung jeweils eine Bolzenaufnahme, beispielsweise eine kreisrunde oder elliptische Öffnung und/oder Vertiefung, insbesondere eine Bohrung, aufweisen. Das Innengehäuse kann zwei zu den Bolzenaufnahmen korrespondierende zylinderförmige Fortsätze bzw. Bolzen aufweisen, welche beidseitig in einer Linie zueinander am Innengehäuse angeordnet bzw. an dieses angeformt sind. Diese Bolzen sind so ausgebildet, dass diese in die korrespondierende Bolzenaufnahme eingreifen können. Somit definieren die Bolzen eine Schwenkachse des Innengehäuses, welche im Wesentlichen parallel zu einer Bodenwandung und zu einer Deckenwandung des Außengehäuses ausgerichtet ist. Vorzugsweise ist das Innengehäuse lösbar im Außengehäuse befestigt.

Die Verstellvorrichtung umfasst vorzugsweise eine Stellschraube und eine mit dieser zusammenwirkende Verzahnung, welche am Innengehäuse angeordnet, insbesondere an das Innengehäuse angeformt, ist. Bevorzugt ist die Stellschraube als Gewindestift ausgebildet. Vorteilhaft ist es, wenn die Verzahnung um die Schwenkachse des Innengehäuses gekrümmt ausgebildet ist, sodass während des Schwenkens des Innengehäuses ein kontinuierliches Eingreifen eines Gewindes der Stellschraube in die Verzahnung des Innengehäuses gewährleistet ist. Um die Sensorhalterung mit einer geringen Höhe auszubilden, kann vorgesehen sein, dass die Stellschraube orthogonal zur Bodenwandung und zur Deckenwandung des Außengehäuses ausgerichtet und die Verzahnung an einer Rückwand des Innengehäuses angeordnet ist. Vorzugsweise weisen die Bodenwandung und/oder die Deckenwandung eine Betätigungsöffnung auf, durch welche die Stellschraube beispielsweise mittels Schraubenzieher betätigt werden kann.

Alternativ dazu kann die Stellschraube parallel zur Bodenwandung und zur Deckenwandung des Außengehäuses ausgerichtet und die Verzahnung an einer Bodenwandung oder Deckenwandung des Innengehäuses angeordnet sein. Dadurch kann die Sensorhalterung mit einer geringen Tiefe ausgebildet sein. Hierbei kann die Rückwandung des Außengehäuses die Betätigungsöffnung aufweisen, durch welche die Stellschraube beispielsweise mittels Schraubenzieher betätigt werden kann.

Bevorzugt weist die Fördervorrichtung eine Lichtschranke auf, welche den Sensor und einen zum Sensor korrespondierenden Lichtreflektor umfasst, wobei der Sensor einen Lichtempfänger aufweist und der Lichtreflektor auf einer dem Sensor gegenüberliegenden Seite des Förderbereiches positioniert ist, sodass der abgestrahlte Lichtstrahl am Lichtreflektor reflektierbar und ein reflektierter Lichtstrahlt vom Lichtreflektor zum Lichtempfänger führbar ist. Der Sensor ist somit als Reflexionslichtschranke ausgebildet. Dadurch können die Lichtquelle und der Lichtempfänger auf derselben Seite des Förderbereiches, insbesondere in einem gemeinsamen Gehäuse positioniert sein. Somit ergibt sich der Vorteil, dass bloß am ersten Rahmenprofil eine Verkabelung des Sensors installiert werden muss, während am zweiten Rahmenprofil ein passives Element, nämlich der Lichtreflektor, angeordnet ist. Der Lichtstrahl wird hierbei im Wesentlichen als abgestrahlter Lichtstrahl durch den Förderbereich vom Sensor zum Lichtreflektor und als reflektierter Lichtstrahl durch den Förderbereich zurück zum Sensor geführt. Hierbei kann der Lichtreflektor am zweiten Rahmenprofil oder am zweiten Seitenführungsprofil befestigt sein.

Ein am Sensor in Förderrichtung vorbeitransportiertes Stückgut unterbricht den Lichtstrahl. Die Unterbrechung wird vom Sensor detektiert und in ein elektrisches Signal umgewandelt. Somit kann ein Vorhandensein des Stückguts in einem bestimmten Abschnitt der Fördervorrichtung erfasst werden. Durch den Lichtreflektor wird eine vom Lichtstrahl zurückgelegte Weglänge im Wesentlichen verdoppelt und der Lichtstrahl zweimal durch den Förderbereich geführt. Eine Wahrscheinlichkeit, dass der Lichtstrahl mittels Reflexionen am zu detektierenden Stückgut vorbeigeführt wird, ist dadurch reduziert und die Sensitivität des Sensors bzw. der Lichtschranke erhöht.

Zweckmäßigerweise weist das zweite Seitenführungsprofil eine zweite Durchgangsöffnung auf, durch welche der abgestrahlte Lichtstrahl zum Lichtreflektor und der reflektierte Lichtstrahl in den Förderbereich führbar ist und welche eine reflektorseitige Lochblende für den abgestrahlten Lichtstrahl und/oder den reflektierten Lichtstrahl bereitstellt. Somit kann der Lichtreflektor analog zum Sensor bzw. ebenfalls auf einer vom zwischen dem ersten Seitenführungsprofil und dem zweiten Seitenführungsprofil liegenden Förderbereich abgewandten Seite des ersten bzw. zweiten Seitenführungsprofils angeordnet sein. Durch die reflektorseitige Lochblende kann ebenfalls ein Lichtkegelwinkel des auf den Reflektor einfallenden abgestrahlten Lichtstrahl und/oder des reflektierten Lichtstrahls beschränkt werden, wodurch die Sensitivität des Sensors weiter erhöht wird.

Mit Vorteil ist der Sensor über eine Verstellvorrichtung relativ zur ersten Durchgangsöffnung einstellbar, sodass die erste Durchgangsöffnung einen Teil des abgestrahlten Lichtstrahls abschneidet. Dadurch kann der abgestrahlte Lichtstrahl und/oder der Lichtkegelwinkel des abgestrahlten Lichtstrahls gezielt begrenzt bzw. beschnitten werden, wodurch eine Sensitivität des Sensors weiter erhöht wird.

Analog zum Sensor und unter Ausnutzung der zuvor genannten Vorteile kann vorgesehen sein, dass der Lichtreflektor über eine weitere Verstellvorrichtung relativ zur zweiten Durchgangsöffnung einstellbar ist, sodass die zweite Durchgangsöffnung einen Teil des reflektierten Lichtstrahls abschneidet.

Es hat sich bewährt, dass eine Lichtachse des abgestrahlten Lichtstrahls versetzt und/oder geneigt gegenüber einer Mittelachse der ersten Durchgangsöffnung verläuft.

Zweckmäßigerweise ist vorgesehen, dass eine Lichtachse des reflektierten Lichtstrahls versetzt und/oder geneigt gegenüber einer Mittelachse der zweiten Durchgangsöffnung verläuft. Dadurch kann ein Randbereich des abgestrahlten Lichtstrahls und/oder des reflektierten Lichtstrahls abgeschnitten und somit ein Lichtkegel beschränkt werden, wodurch die Sensitivität des Sensors erhöht wird.

Es kann sich auch von Vorteil erweisen, wenn zumindest eine Seitenführungshalterung der Seitenführungshalterungen an einem korrespondierenden Rahmenprofil der Rahmenprofile über eine Verbindungsvorrichtung befestigt ist. Die Verbindungsvorrichtung umfasst eine Anbindungsanordnung und einen mit dieser zusammenwirkenden Montageschenkel, welcher am korrespondierenden Rahmenprofil der Rahmenprofile angeordnet ist und eine Vielzahl von in Längsrichtung des Montageschenkels beabstandet zueinander angeordneter Ausnehmungen aufweist. Die Anbindungsanordnung ist an der Seitenführungshalterung angeordnet und mit dem zusammenwirkenden Montageschenkel verbindbar.

Auch kann es vorteilhaft sein, wenn zusätzlich eine Abdeckung an einer Unterseite der Fördervorrichtung vorgesehen ist. Die Abdeckung ist unterhalb des zumindest einen Förderelementes zwischen dem ersten Rahmenprofil und dem zweiten Rahmenprofil angeordnet und verläuft in Förderrichtung des Stückguts. Die Abdeckung ist entlang eines ersten Randabschnitts der Abdeckung über eine Vielzahl von Abdeckungshalterungen am ersten Rahmenprofil und entlang eines zweiten Randabschnitts der Abdeckung über eine Vielzahl von Abdeckungshalterungen am zweiten Rahmenprofil befestigt. Zumindest eine Abdeckungshalterung der Abdeckungshalterungen weist eine Anbindungsanordnung auf und ist über eine Verbindungsvorrichtung mit der Abdeckung verbindbar. Der erste Randabschnitt der Abdeckung und der zweite Randabschnitt der Abdeckung bilden jeweils einen Montageschenkel aus, wobei der Montageschenkel an der Abdeckung angeordnet ist und eine Vielzahl von in Längsrichtung des Montageschenkels beabstandet zueinander angeordneter Ausnehmungen aufweist.

Vorzugsweise ist die Abdeckung als Unterseitenabdeckung ausgebildet. Die Unterseitenabdeckung dient als Schutz vor einem Eingriff von unten in die Fördervorrichtung. Darüber hinaus kann die Abdeckung mit einer Matte ausgekleidet sein, um einen Schall bzw. Lärm der Fördervorrichtung zu dämmen.

Die Anbindungsanordnung weist nach beiden Ausführungen einen Basiskörper auf, welcher eine Bodenwandung, ein Verbindungselement und eine Verriegelungsvorrichtung umfasst, wobei die Bodenwandung eine Montagefläche bereitstellt und das Verbindungselement von der Montagefläche vorragend angeordnet und in einer Anbindungsposition der Anbindungsanordnung mit einer ersten Ausnehmung der Ausnehmungen in Eingriff bringbar ist, wobei das Verbindungselement eine orthogonal auf die Montagefläche ausgerichtete Montagedrehachse ausbildet, um welche die Anbindungsanordnung aus der Anbindungsposition in eine Montageposition drehbar ist, wobei die Verriegelungsvorrichtung ein Verriegelungselement aufweist, welches senkrecht zur Montagefläche bewegbar ist, um in eine zweite Ausnehmung der Ausnehmungen einzugreifen, und welches beabstandet zum Verbindungselement angeordnet ist, sodass das Verriegelungselement der Verriegelungsvorrichtung in der Montageposition der Anbindungsanordnung mit der zweiten Ausnehmung der Ausnehmungen des Montageschenkels in Eingriff bringbar ist.

Ein erzielter Vorteil ist vor allem darin zu sehen, dass die Anbindungsanordnung in einfacher Art und Weise, insbesondere ohne Schrauben, mit einem Montageschenkel verbindbar und universell einsetzbar ist, beispielsweise zur Montage von Seitenführungsprofilen oder Abdeckungen, insbesondere Unterseitenabdeckungen. Vorteilhaft ist es, dass die Montage ohne Werkzeug erfolgen kann. Hierbei kann das Verbindungselement der Anbindungsanordnung von oben in die erste Ausnehmung der Ausnehmungen gesteckt und zur Fixierung in die Montageposition gedreht werden, in welcher die Verriegelungsvorrichtung in die zweite Ausnehmung der Ausnehmungen eingreift. Somit wird mit der Anbindungsanordnung eine einfache und verriegelbare Steck-Dreh-Verbindung realisiert.

Bevorzugt ist hierbei vorgesehen, dass die erste Ausnehmung und die zweite Ausnehmung bzw. die Ausnehmungen identisch ausgebildet sind.

"Von oben" fixieren, befestigen oder dergleichen bedeutet im Sinne der Erfindung im Wesentlichen von oberhalb der Förderebene kommend.

Der Montageschenkel kann an einem Rahmenprofil einer Fördervorrichtung und/oder an einer Abdeckung angeordnet sein. Die Längsrichtung des Montageschenkels entspricht hierbei bevorzugt einer Längsrichtung des Rahmenprofils und/oder der Fördervorrichtung. Im Wesentlichen erstreckt sich die Längsrichtung des Montageschenkels, des Rahmenprofils und/oder der Fördervorrichtung in einer Förderrichtung des Stückguts. In gekrümmten Förderabschnitten der Fördervorrichtung kann die Längsrichtung des Montageschenkels, des Rahmenprofils und/oder der Fördervorrichtung selbstverständlich ebenso gekrümmt sein. Alternativ verläuft die Längsrichtung des Montageschenkels entlang einer Breitseite oder einer Längsseite der Abdeckung.

Vorzugsweise ist vorgesehen, dass das Verbindungselement zapfenförmig ausgebildet ist. Darüber hinaus kann vorgesehen sein, dass die Verriegelungsvorrichtung dazu ausgebildet ist, selbsttätig in die zweite Ausnehmung der Ausnehmungen einzugreifen. Alternativ kann die Verriegelungsvorrichtung so ausgebildet sein, dass diese manuell mit der zweiten Ausnehmung der Ausnehmungen in Eingriff gebracht werden kann.

Zur Montage von Seitenführungsprofilen kann beispielsweise vorgesehen sein, dass der Montageschenkel an einem Rahmenprofil der Fördervorrichtung angeordnet ist, sodass eine entsprechende Halterung mittels der Anbindungsanordnung ergonomisch vorteilhaft von oben mit dem Rahmenprofil verbunden werden kann. Darüber hinaus wird ein Arbeits- und Zeitaufwand bei der Montage der Fördervorrichtung wesentlich reduziert, zumal kein Anschrauben der Anbindungsanordnung am Rahmenprofil erforderlich ist und bei Fördervorrichtungen in der Regel eine Vielzahl von Halterungen fixiert werden müssen.

Da keine seitliche Befestigung der Seitenführungshalterung am Rahmenprofil erfolgt, ist es auch möglich, eine einstückige Seitenabdeckung des Rahmenprofils, insbesondere eine Kunststoffabdeckung, am Rahmenprofil anzubringen, ohne dass die Seitenabdeckung in Teilstücke unterteilt bzw. gestückelt werden muss. Dadurch ist die Montage der Fördervorrichtung zusätzlich vereinfacht. Darüber hinaus wird mit der einstückigen seitlichen Abdeckung bzw. Seitenabdeckung eine Anzahl an Stoßfugen entlang einer Seitenfläche des Rahmenprofils und/oder entlang einer Seitenfläche einer Vielzahl von Rahmenprofilen einer Fördervorrichtung wesentlich reduziert, sodass eine Reinigung der Fördervorrichtung vereinfacht wird.

Zum Herstellen einer Verbindung zwischen der Anbindungsanordnung und dem Montageschenkel wird die Anbindungsanordnung zunächst in die Anbindungsposition gebracht, in welcher das Verbindungselement in die erste Ausnehmung der Ausnehmungen gesteckt wird.

Dadurch wird die vom Verbindungselement definierte Drehachse positioniert und ausgerichtet. Die Anbindungsanordnung wird dann um die Drehachse rotiert bzw. geschwenkt, wodurch die Anbindungsanordnung aus der Anbindungsposition in die Montageposition gebracht wird. In der Montageposition wird die Verriegelungsvorrichtung mit der zweiten Ausnehmung der Ausnehmungen in Eingriff gebracht. Somit ist die Anbindungsanordnung gegen ein unbeabsichtigtes Zurückrotieren bzw. Zurückschwenken in die Anbindungsposition gesichert.

Zum Lösen der Verbindung zwischen der Anbindungsanordnung und dem Montageschenkel wird die Verriegelungsvorrichtung aus der zweiten Ausnehmung der Ausnehmungen herausbewegt. Die Anbindungsanordnung kann nun aus der Montageposition in die Anbindungsposition gedreht werden, in welcher das Verbindungselement aus der ersten Ausnehmung der Ausnehmungen herausbewegt und beispielsweise die Seitenführungshalterung vom Rahmenprofil entfernt werden kann.

Mit Vorteil weist die Verriegelungsvorrichtung ein Verriegelungselement auf, welches senkrecht zur Montagefläche, insbesondere aus dem Basiskörper heraus, bewegbar ist, um in die zweite Ausnehmung der Ausnehmungen einzugreifen.

Hierbei kann vorgesehen sein, dass die Bodenwandung, vorzugsweise an der Unterseite, eine Vertiefung aufweist, wobei das Verriegelungselement zumindest teilweise, insbesondere vollständig, in die Vertiefung und/oder zumindest teilweise aus der Vertiefung heraus bewegbar ist. Die Vertiefung kann beispielsweise durch die Bodenwandung hindurchreichend, vorzugsweise als Durchgangsloch, ausgebildet sein, sodass das Verriegelungselement zumindest teilweise, insbesondere vollständig, in den Basiskörper und/oder zumindest teilweise aus dem Basiskörper heraus bewegbar ist. Vorzugsweise ist das Verriegelungselement so in die Vertiefung bzw. in den Basiskörper bewegbar, dass das Verriegelungselement bündig mit der Bodenwandung, insbesondere mit der Unterseite der Bodenwandung, abschließt. Somit kann das Verriegelungselement zumindest teilweise innerhalb des Basiskörpers bzw. innerhalb der Vertiefung in der Bodenwandung angeordnet sein, um die Anbindungsanordnung aus der Anbindungsposition in die Montageposition oder umgekehrt zu bewegen. Ebenso kann das Verriegelungselement zumindest teilweise aus dem Basiskörper bzw. aus der Vertiefung der Bodenwandung vorragen, um die Anbindungsanordnung in der Montageposition zu arretieren. Es hat sich bewährt, dass das Verriegelungselement als Zapfen ausgebildet ist.

Es kann bevorzugt vorgesehen sein, dass das Verriegelungselement senkrecht zur Montagefläche und entgegen einer Wirkung einer Federkraft bewegbar ist, wobei das Verriegelungselement in der Montageposition selbsttätig unter Ausnutzung der Federkraft in die zweite Ausnehmung der Ausnehmungen eingreifen kann.

Günstig ist es, wenn die Verriegelungsvorrichtung ein Federelement umfasst, wobei das Verriegelungselement am Federelement angeordnet ist. Somit ist das Verriegelungselement entgegen der Wirkung der Federkraft bewegbar, um das Federelement vorzuspannen, sodass das Verriegelungselement unter Entspannung des Federelementes selbsttätig in die zweite Ausnehmung der Ausnehmungen eingreifen kann. Hierbei kann vorgesehen sein, dass das Verriegelungselement ein Rastelement bereitstellt. Gegebenenfalls kann das Verriegelungselement oder das Rastelement drehbar am Federelement gelagert sein.

Das Federelement kann beispielsweise als Federarm ausgebildet sein, an welchem das Verriegelungselement bzw. das Rastelement angeordnet ist. Vorzugsweise ist das Rastelement als Rastnase ausgebildet, welche an den Federarm angeformt ist.

Alternativ dazu kann das Federelement in der Vertiefung der Bodenwandung angeordnet sein. Die Vertiefung ist bevorzugt zylinderförmig ausgebildet. Hierbei kann das Federelement an einem ersten Ende mit der Bodenwandung verbunden sein. An einem zweiten Ende des Federelementes kann das Verriegelungselement positioniert sein, sodass das Verriegelungselement zumindest teilweise aus der Vertiefung ragt, wenn das Federelement entspannt ist. Das Verriegelungselement wirkt so mit dem Federelement zusammen, dass das Federelement gespannt bzw. komprimiert wird, wenn das Verriegelungselement zumindest teilweise in die Vertiefung gedrückt wird.

Beispielsweise kann das Rastelement bzw. das Verriegelungselement zapfenförmig, keilförmig oder kugelförmig bzw. als Kugel ausgebildet sein. Bevorzugt ist das Federelement als Spiralfeder ausgebildet.

Zweckmäßigerweise weist die Bodenwandung zwei von einem ersten Rand der Bodenwandung in Richtung eines dem ersten Rand gegenüberliegenden zweiten Randes der Bodenwandung erstreckende und voneinander beabstandete Schlitze auf, sodass die Bodenwandung zwischen den Schlitzen biegbar ist, um das Federelement bereitzustellen. Ein Abschnitt der Bodenwandung zwischen den Schlitzen ist somit relativ zu einem übrigen Abschnitt der Bodenwandung und im Wesentlichen orthogonal zur Montagefläche biegbar und bildet das Federelement bzw. den Federarm aus. Dies ermöglicht eine Bewegung des Verriegelungs- bzw. Rastelementes, welches am Federelement angeordnet ist, sodass dieses über den Montageschenkel führbar ist und in die zweite Ausnehmung der Ausnehmungen einrasten kann. Ferner ist es günstig, wenn hierbei der Basiskörper zumindest teilweise als Hohlkörper ausgebildet ist.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
- Fig. 1: einen Abschnitt einer Fördervorrichtung;
- Fig. 2: eine Seitenführungshalterung mit einer Anbindungsanordnung;
- Fig. 3a: die Anbindungsanordnung in einer Anbindungsposition in einer Ansicht von unten;
- Fig. 3b: die Anbindungsanordnung in einer Montageposition in einer Ansicht von unten;
- Fig. 4a: die Seitenführungshalterung in der Anbindungsposition in einer Ansicht von oben;
- Fig. 4b: die Seitenführungshalterung in der Montageposition in einer Ansicht von oben;
- Fig. 5: einen Querschnitt durch die Fördervorrichtung und die Seitenführungshalterung gemäß V in Fig. 1;
- Fig. 6: eine Seitenansicht der Fördervorrichtung;
- Fig. 7: eine Sensorhalterung mit der Anbindungsanordnung;
- Fig. 8: einen Querschnitt durch die Sensorhalterung;
- Fig. 9: einen Querschnitt durch die Fördervorrichtung und die Sensorhalterung gemäß IX in Fig. 1;
- Fig. 10a: eine erste Ausführung einer Abdeckungshalterung mit der Anbindungsanordnung;
- Fig. 10b: die Abdeckungshalterung nach Fig. 10a in einer weiteren Darstellung;
- Fig. 10c: eine zweite Ausführungsform der Abdeckungshalterung;
- Fig. 11: die Abdeckungshalterung an einer Abdeckung;
- Fig. 12a: einen Querschnitt durch die befestigte Abdeckungshalterung in einer ersten Querschnittsebene;
- Fig. 12b: einen Querschnitt durch die befestigte Abdeckungshalterung in einer zweiten Querschnittsebene;
- Fig. 13a: einen Abschnitt einer erfindungsgemäßen Fördervorrichtung, mit einer ersten Ausführung einer Sensorhalterung und einer zweiten Ausführung einer Sensorhalterung;
- Fig. 13b: die erfindungsgemäße Fördervorrichtung nach Fig. 13a mit einer dritten Ausführung einer Sensorhalterung;
- Fig. 14: einen Querschnitt durch ein Seitenführungsprofil und schematisch angedeutet das Rahmenprofil der erfindungsgemäßen Fördervorrichtung nach Fig. 13a und Fig. 13b.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

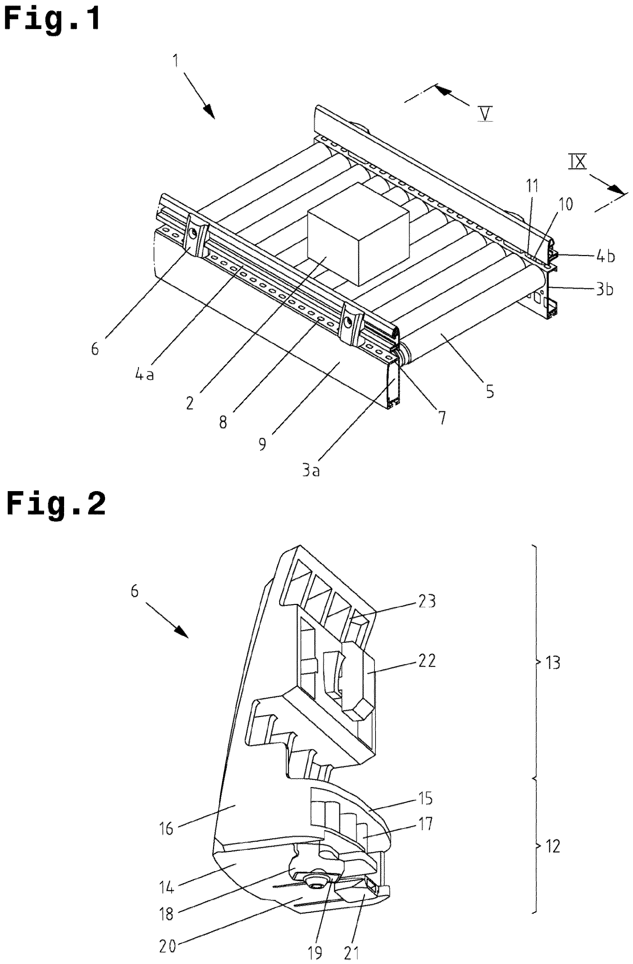

Fig. 1 zeigt eine perspektivische Darstellung eines Abschnitts einer Fördervorrichtung 1 zum Transport von Stückgut 2, umfassend zwei Rahmenprofile 3a, 3b, zwei Seitenführungsprofile 4a, 4b und eine Vielzahl von Förderelementen 5.

Im gezeigten Beispiel verlaufen ein erstes Rahmenprofil 3a und ein zweites Rahmenprofil 3b mit gegenseitigem Abstand parallel zueinander in einer Förderrichtung des Stückguts 2. Die Förderelemente 5 sind zwischen dem ersten Rahmenprofil 3a und dem zweiten Rahmenprofil 3b angeordnet und definieren eine Förderebene.

Hierbei sind die Förderelemente 5 als Förderrollen ausgebildet. Alternativ dazu kann beispielsweise vorgesehen sein, dass die Förderelemente 5 als Fördergurte ausgebildet sind oder ein Förderelement 5 vorgesehen ist, welches als Fördergurt ausgebildet ist. Auch kann ein Fördergurt um Förderrollen geführt werden, sodass das Förderelement 5 durch den Fördergurt gebildet ist.

Das Stückgut 2 wird auf der Förderebene FE bzw. in einem Förderbereich transportiert, welcher seitlich durch die Seitenführungsprofile 4a, 4b bzw. durch einander zugewandte Innen-oder Führungsseiten der Seitenführungsprofile 4a, 4b und nach unten durch die Förderebene FE begrenzt ist.

Um den Förderbereich seitlich zu begrenzen, verlaufen ein erstes Seitenführungsprofil 4a und ein zweites Seitenführungsprofil 4b ebenfalls mit gegenseitigem Abstand parallel zueinander und in Förderrichtung des Stückguts 2. Die Seitenführungsprofile 4a, 4b sind jeweils über eine Vielzahl von Seitenführungshalterungen 6 an einem korrespondierenden Rahmenprofil 3a, 3b befestigt.

Darüber hinaus weisen die Seitenführungsprofile 4a, 4b jeweils eine Führungsseite und eine Montageseite auf. Bei der gezeigten Fördervorrichtung 1 sind die Seitenführungsprofile 4a, 4b so angeordnet, dass deren Führungsseiten einander bzw. dem Förderbereich zugewandt sind. Die Montageseite des ersten Seitenführungsprofils 4a und die Montageseite des zweiten Seitenführungsprofils 4b sind voneinander bzw. vom Förderbereich abgewandt. Überdies sind die Seitenführungsprofile 4a, 4b jeweils an der Montageseite mit den Seitenführungshalterungen 6 verbunden.

Ferner weisen die Rahmenprofile 3a, 3b jeweils einen Montageschenkel 7 auf, welcher eine Vielzahl von zueinander beabstandeten Ausnehmungen 8 umfasst. Zur Befestigung der Seitenführungshalterungen 6 am Rahmenprofil 3a, 3b sind diese jeweils so ausgebildet, dass die Seitenführungshalterungen 6 in die Ausnehmungen 8 im Montageschenkel 7 eingreifen können.

Die Rahmenprofile 3a, 3b weisen im Wesentlichen einen C-förmigen Querschnitt auf, wobei eine Seitenabdeckung 9 zum Verschließen bzw. Abdecken einer offenen Seite des C-förmigen Querschnittes. Somit wird ein durch das Rahmenprofil 3a, 3b und die Seitenabdeckung 9 begrenzter Innenraum des Rahmenprofils 3a, 3b bereitgestellt. In Fig. 1 ist das erste Rahmenprofil 3a mit der Seitenabdeckung 9 und das zweite Rahmenprofil 3b ohne Seitenabdeckung 9 dargestellt.

Zur Detektion des Stückguts 2 weist die Fördervorrichtung 1 einen Sensor 10 auf, welcher mittels einer Sensorhalterung 11 am zweiten Rahmenprofil 3b befestigt ist. Die Sensorhalterung 11 ist hierbei analog zur Seitenführungshalterung 6 montiert, sodass diese in die Ausnehmungen 8 im Montageschenkel 7 eingreifen kann.

In Fig. 2 ist eine perspektivische Darstellung einer Seitenführungshalterung 6 gezeigt, welche eine Anbindungsanordnung 12 und eine Montageaufnahme 13 umfasst. Die Anbindungsanordnung 12 ist an einer Unterseite der Seitenführungshalterung 6 angeordnet und bildet in Zusammenwirkung mit dem Montageschenkel 7, insbesondere mit zwei benachbarten Ausnehmungen 8, eine Verbindungsvorrichtung.

Hierbei ist vorgesehen, dass die Anbindungsanordnung 12 an einer Unterseite der Seitenführungshalterung 6 angeordnet ist und einen Basiskörper aufweist. Der Basiskörper umfasst eine Bodenwandung 14, eine Deckenwandung 15, eine Rückwandung sowie zwei Seitenwandungen 16. Eine erste Seitenwandung 16 und eine zweite Seitenwandung 16 sind an zwei gegenüberliegenden Enden der Bodenwandung 14 positioniert und erstrecken sich jeweils zwischen der Bodenwandung 14 und der Deckenwandung 15. Die Rückwandung erstreckt sich von der ersten Seitenwandung 16 zur zweiten Seitenwandung 16 sowie von der Bodenwandung 14 zur Deckenwandung 15. Überdies sind mehrere Stützwandungen 17 vorgesehen, welche sich parallel zu den Seitenwänden von der Bodenwandung 14 zur Deckenwandung 15 erstrecken.

An einer von der Deckenwandung 15 abgewandten Seite bzw. Unterseite der Bodenwandung 14 sind ein Verbindungselement 18 und eine Verriegelungsvorrichtung angeordnet. Das Verbindungselement 18 und die Verriegelungsvorrichtung wirken mit zwei benachbarten Ausnehmungen 8 im Montageschenkel 7 zusammen, um eine Verbindung herzustellen, sodass die Anbindungsanordnung 12 und der Montageschenkel 7 eine Verbindungsvorrichtung ausbilden.

Das Verbindungselement 18 umfasst einen Zapfen mit einem hammerförmigen Kopf an einem von der Bodenwandung 14 vorragenden Ende. Um den hammerförmigen Kopf zu bilden, ist das vorragende Ende mit Hinterschneidungen ausgebildet. Der Zapfen ist an die Bodenwandung 14 angeformt.

Darüber hinaus kann das Verbindungselement 18 ein Versteifungselement 19 umfassen, welches in einer Vertiefung am vorragenden Ende des Verbindungselementes 18 angeordnet ist.

Das Versteifungselement 19 kann als Plättchen, insbesondere aus Stahl oder Aluminium, ausgebildet sein. Zur Fixierung kann das Versteifungselement 19 mit dem Verbindungselement 18 verschraubt werden.

Die Verriegelungsvorrichtung umfasst nach dieser Ausführung ein Federelement 20 und ein Verriegelungselement 21, welches am Federelement 20 angeordnet, vorzugsweise angeformt, ist. Das Federelement 20 kann als Federzunge ausgebildet sein. Somit bilden die Anbindungsanordnung 12 und der Montageschenkel 7 eine verriegelbare Verbindungsvorrichtung.

Im gezeigten Beispiel ist das Verriegelungselement 21 als Rastnase ausgebildet. Um das Federelement 20 zu bilden, weist die Bodenwandung 14 zwei von einem Rand der Bodenwandung 14 ausgehende Schlitze auf, sodass die Bodenwandung 14 zwischen diesen Schlitzen biegbar ist. Ein Abschnitt der Bodenwandung 14 zwischen den Schlitzen bildet somit das Federelement 20 aus. Hierbei verlaufen die Schlitze parallel oder um eine Symmetrieachse gespiegelt zueinander, sodass das Federelement 20 bzw. die Schlitze und gedachte Verbindungslinien zwischen Enden der Schlitze ein Rechteck oder ein gleichschenkeliges Trapez formen.

Es wird festgehalten, dass die in Fig. 2 dargestellte Anbindungsanordnung 12 an der Seitenführungshalterung 6, oder ebenso an einer Halterung für weitere Komponenten und Bauteile der Fördervorrichtung 1 angeordnet oder Teil einer solchen Halterung sein kann.

Die Montageaufnahme 13 ist an einer von der Bodenwandung 14 abgewandten Seite bzw. Oberseite der Deckenwandung 15 angeordnet. Darüber hinaus ist die Montageaufnahme 13 zur formschlüssigen Aufnahme des Seitenführungsprofils 4a, 4b ausgebildet. Hierfür weist die Montageaufnahme 13 eine zur Montageseite des Seitenführungsprofils 4a, 4b korrespondierende Kontur auf.

Um das Seitenführungsprofil 4a, 4b an der Montageaufnahme 13 bzw. an der Seitenführungshalterung 6 zu befestigen, weist die Montageaufnahme 13 ein Verbindungsmittel 22 auf, welches im gezeigten Beispiel eine Hammerkopfschraube umfasst.

Zur Erhöhung einer Formstabilität bzw. einer Biegesteifigkeit der Seitenführungshalterung 6 weist die dargestellte Montageaufnahme 13 mehrere Stützrippen 23 auf, welche im Wesentlichen orthogonal zur Deckenwandung 15 angeordnet sind. Die Stützrippen 23 sind nicht zwingend erforderlich. So kann die Montageaufnahme 13 beispielsweise auch als Vollkörper ausgebildet sein.

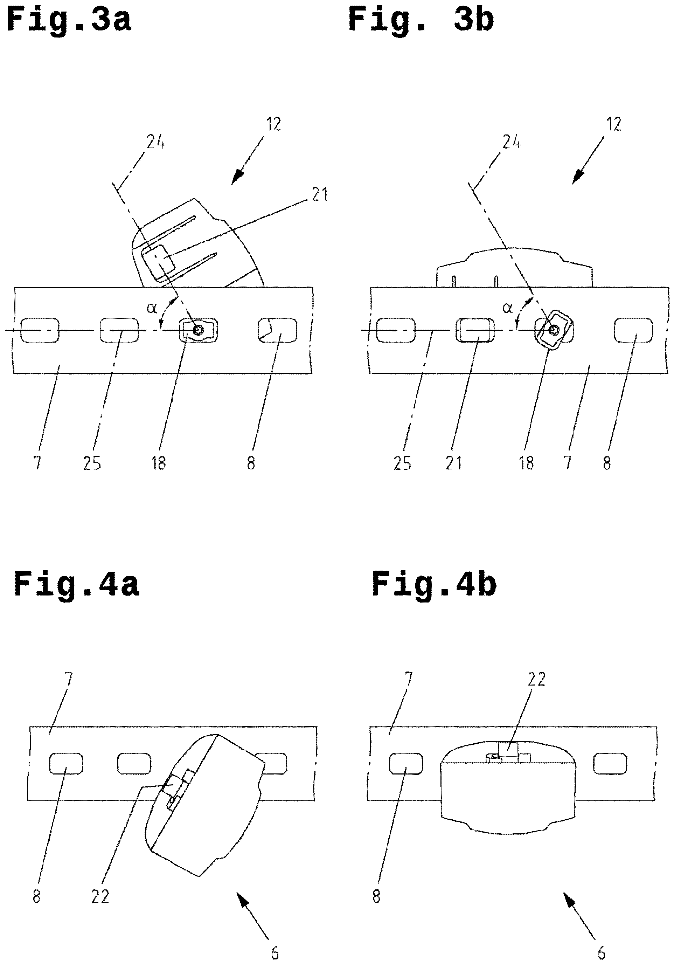

In Fig. 3a und Fig. 3b ist ein Vorgang zum Herstellen einer Verbindung zwischen der Anbindungsanordnung 12 und dem Montageschenkel 7 in einer Unteransicht gezeigt.

Die Ausnehmungen 8 des Montageschenkels 7 sind im gezeigten Beispiel als rechteckige Langausnehmungen bzw. Langlöcher mit abgerundeten Ecken ausgebildet. Eine Umfangsform der Ausnehmungen 8 entspricht im Wesentlichen einer Umfangsform des hammerförmigen Kopfes.

Zur Befestigung der Anbindungsanordnung 12 am Montageschenkel 7 wird die Anbindungsanordnung 12 zunächst in eine Anbindungsposition 24 gebracht. In der Anbindungsposition 24 befindet sich das Verbindungselement 18 in derselben Orientierung wie eine erste Ausnehmung 8 der Ausnehmungen 8. Somit kann der hammerförmige Kopf des Verbindungselementes 18 durch die erste Ausnehmung 8 hindurchgeführt werden. Dies ist in Fig. 3a gezeigt. Das nunmehr in der ersten Ausnehmung 8 eingeführte Verbindungselement 18 definiert eine Drehachse, um welche die Anbindungsanordnung 12 in eine Montageposition 25 gedreht bzw. geschwenkt werden kann. Die Drehachse ist senkrecht auf den Montageschenkel 7 ausgerichtet. Wie in Fig. 3a und Fig. 3b erkennbar ist, sind die Ausnehmungen 8, insbesondere die erste und zweite Ausnehmung 8 der Ausnehmungen 8 identisch ausgebildet.

Anschließend kann die Anbindungsanordnung 12 um einen bestimmten Drehwinkel α, insbesondere um zumindest 30°, vorzugsweise um einen Winkel in einem Bereich von 45° bis 90°, besonders bevorzugt um etwa 60°, um die Drehachse in die Montageposition 25 gedreht werden. Fig. 3b zeigt die Anbindungsanordnung 12 in der Montageposition 25.

In der Montageposition 25 hintergreift der hammerförmige Kopf des Verbindungselementes 18 den Montageschenkel 7 in einem Randbereich der ersten Ausnehmung 8. Das Verbindungselement 18 ist somit in der ersten Ausnehmung 8 orthogonal zum Montageschenkel 7 gegen ein herausbewegen aus dieser gesichert.

Während einer Drehung der Anbindungsanordnung 12 aus der Anbindungsposition 24 in die Montageposition 25 wirken das Verriegelungselement 21 und der Montageschenkel 7 so zusammen, dass das Verriegelungselement 21 und das Federelement 20 entgegen einer Wirkung einer Federkraft orthogonal zum Montageschenkel 7 und in Richtung der Deckenwandung 15 des Basiskörpers bzw. nach oben bewegt werden. Hierbei wird das Federelement 20 vorgespannt.

In der Montageposition 25 ist das Verriegelungselement 21 über einer zweiten Ausnehmung 8 der Ausnehmungen 8 bzw. in einer Linie mit dieser positioniert, sodass das Verriegelungselement 21 unter Entspannung des Federelementes 20 selbsttätig in die zweiten Ausnehmung 8 eingreift und einrastet. Dadurch wird die Anbindungsanordnung 12 gegen eine unbeabsichtigte Drehung um die Drehachse gesichert, wodurch die Verbindungsvorrichtung verriegelt ist.

In einer alternativen Ausführungsform kann vorgesehen sein, dass das Verriegelungselement 21 zunächst bündig oder rückspringend mit der Bodenwandung 14 angeordnet ist und in der Montageposition 25 nicht selbsttätig einrastet, sondern durch die zweite Ausnehmung 8 bewegt bzw. gedrückt werden muss.

Um die Verbindung zu lösen, wird das Verriegelungselement 21 zunächst aus der zweiten Ausnehmung 8 bewegt werden. Dann kann die Anbindungsanordnung 12 aus der Montageposition 25 in die Anbindungsposition 24 gedreht werden, in welcher das Verbindungselement 18 aus der ersten Ausnehmung 8 der Ausnehmungen 8 gezogen werden kann.

Eine Ausrichtung der Anbindungsposition 24 und der Montageposition 25, sowie der Drehwinkel α sind in Fig. 3a und Fig. 3b jeweils durch eine strichpunktierte Linie angedeutet.

In Fig. 4a und Fig. 4b ist der in Fig. 3a und Fig. 3b allgemein für die Anbindungsanordnung 12 gezeigte Vorgang zum Herstellen der Verbindung für die Seitenführungshalterung 6 in einer Draufsicht dargestellt. Hierbei wird die Seitenführungshalterung 6 aus der Anbindungsposition 24 ( Fig. 4a) in die Montageposition 25 (Fig. 4b) bewegt. Die Seitenführungshalterung 6 ist wie in Fig. 2 dargestellt ausgebildet, wobei in Fig. 4a und Fig. 4b das Verbindungsmittel 22 der Seitenführungshalterung 6 ersichtlich ist.

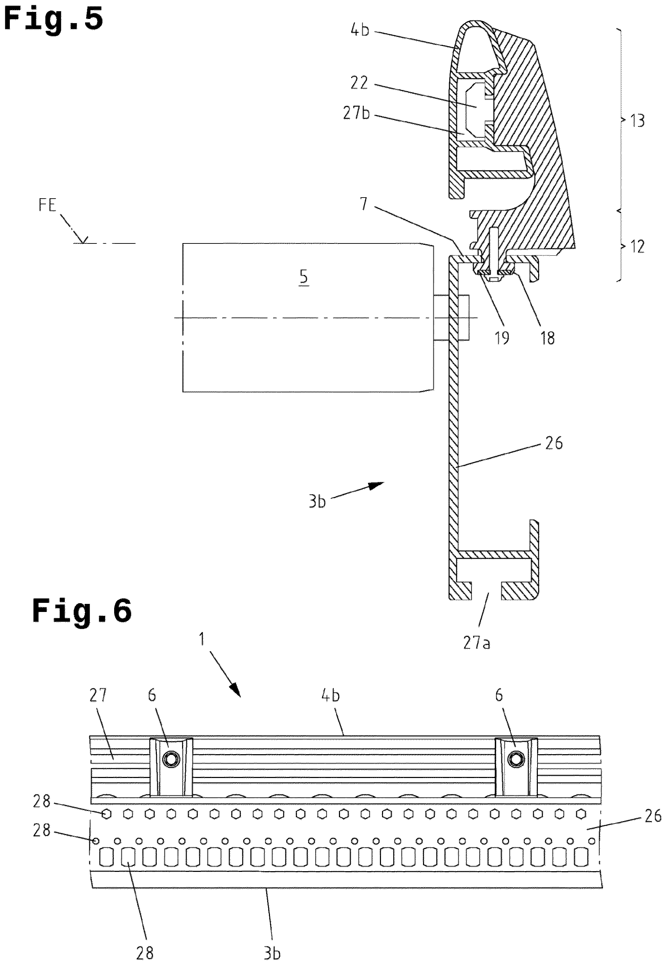

Fig. 5 zeigt einen Querschnitt durch die Fördervorrichtung 1 entlang der Linie V-V in Fig. 1. Hierbei ist das zweite Seitenführungsprofil 4b über Seitenführungshalterungen 6 am zweiten Rahmenprofil 3b befestigt. Das erste Seitenführungsprofil 4a kann selbstverständlich in analoger Weise über eine weitere Seitenführungshalterungen 6 am ersten Rahmenprofil 3a befestigt sein. Die Förderebene FE ist orthogonal zur Bildebene ausgerichtet.

Ferner umfasst das Rahmenprofil 3a, 3b einen Profilschenkel 26, an welchem die Förderelemente 5 mittels einer Rollenachse drehbar gelagert sind. Orthogonal vom Profilschenkel 26 vorragend und vom Förderbereich bzw. vom Förderelement 5 weggerichtet ist der Montageschenkel 7 des Rahmenprofils 3a, 3b angeordnet. Darüber hinaus umfasst das Rahmenprofil 3a, 3b einen weiteren Schenkel, welcher parallel zum Montageschenkel 7 an einem dem Montageschenkel 7 gegenüberliegenden Ende des Profilschenkels 26 angeordnet ist.

Der Montageschenkel 7, der Profilschenkel 26 und der weitere Schenkel bilden somit im Wesentlichen den C-förmigen Querschnitt des Rahmenprofils 3a, 3b. Ferner weist der weitere Schenkel eine nach unten gerichtete bzw. vom Montageschenkel 7 abgewandte Befestigungsnut 27a auf.

Die Seitenführungshalterung 6 kann durch die Anbindungsanordnung 12, insbesondere wie in Fig. 3a bis Fig. 4b gezeigt, am Montageschenkel 7 des Rahmenprofils 3a, 3b befestigt werden.

In Fig. 5 ist die Seitenführungshalterung 6 in einem Querschnitt durch das Verbindungselement 18 sowie eine erste Stützwandung 17, welche in einer Linie mit dem Verbindungselement 18 angeordnet ist, dargestellt, sodass eine Befestigungsschraube für das Versteifungselement 19 ersichtlich ist. Die Befestigungsschraube verläuft entlang einer Längsachse des Verbindungselementes 18. Hierbei ist vorgesehen, dass die Schraube durch das Verbindungselement 18 und durch die Bodenwandung 14 durch in die erste Stützwandung 17 ragt. Das Verbindungselement 18 und die erste Stützwandung 17 weisen hierfür eine zylinderförmige Bohrung mit einem Innengewinde für die Befestigungsschraube auf.

Das Seitenführungsprofil 4a, 4b weist an der Montageseite eine Befestigungsnut 27b auf, welche mit dem Verbindungsmittel 22, insbesondere mit der Hammerkopfschraube, zusammenwirkt, um das Seitenführungsprofil 4a, 4b an der Seitenführungshalterung 6 zu befestigen.

In Fig. 6 ist eine Seitenansicht der Fördervorrichtung 1 dargestellt, wobei das Seitenführungsprofil 4b mittels Seitenführungshalterungen 6 am Rahmenprofil 3b befestigt ist. Ein derartiger Aufbau ist gleichermaßen für das erste Seitenführungsprofil 4a am ersten Rahmenprofil 3a sowie für das zweite Seitenführungsprofil 4b am zweiten Rahmenprofil 3b möglich, wie in Fig. 1 ersichtlich. Auch in dieser Darstellung ist die Seitenabdeckung 9 nicht gezeigt.

Der Profilschenkel 26 des Rahmenprofils 3a, 3b umfasst eine Vielzahl von Montageöffnungen 28. Es ist vorgesehen, dass die Förderelemente 5 in derartigen Montageöffnungen 28 gelagert sind, wie dies in Fig. 5 dargestellt ist. Hierfür greift die Rollenachse der Förderelemente 5 in einander gegenüberliegende Montageöffnungen 28 des ersten Rahmenprofils 3a und des zweiten Rahmenprofils 3b ein.

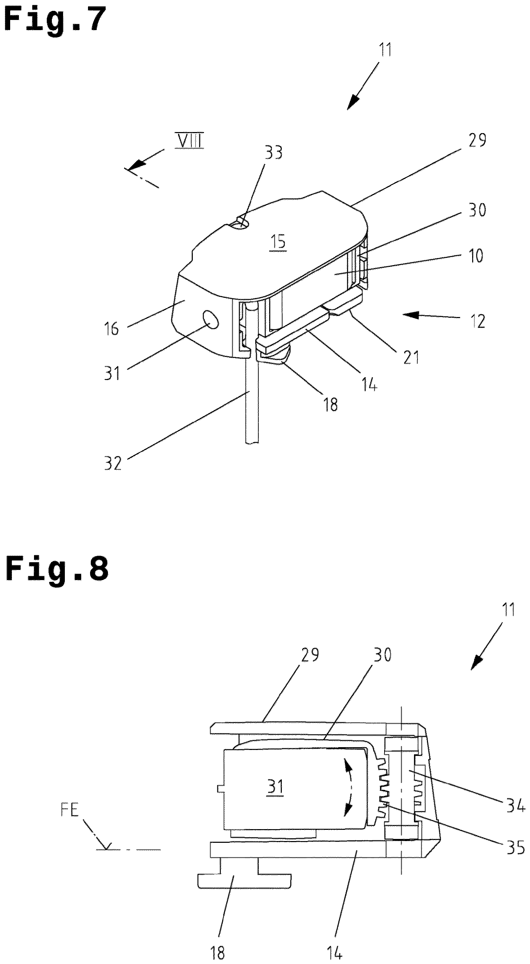

Fig. 7 zeigt die Sensorhalterung 11 in einer perspektivischen Darstellung, wobei die Anbindungsanordnung 12 an einer Unterseite der Sensorhalterung 11 angeordnet ist. Die Sensorhalterung 11 ist somit durch die Anbindungsanordnung 12 am Montageschenkel 7 des Rahmenprofils 3a, 3b fixierbar. Ein Befestigungsvorgang erfolgt wie zuvor beschrieben und in Fig. 3a und Fig. 3b gezeigt.

Hierbei ist vorgesehen, dass der Basiskörper der Anbindungsanordnung 12 ein Außengehäuse 29 der Sensorhalterung 11 bereitstellt. Innerhalb des Außengehäuses 29 ist ein Innengehäuse 30 angeordnet, in welchem der Sensor 10 positioniert ist.

Das Innengehäuse 30 ist nach dieser Ausführung schwenkbar am Außengehäuse 29 gelagert. Hierfür weisen die erste Seitenwandung 16 und die zweite Seitenwandung 16 der Anbindungsanordnung 12 bzw. des Außengehäuses 29 jeweils eine Bolzenaufnahme 31 auf. Die Bolzenaufnahme 31 umfasst ein Durchgangsloch, zur Aufnahme eines Bolzens, und eine Führungskerbe, in welcher der Bolzen zum Durchgangsloch führbar ist.

Hierbei ist vorgesehen, dass an gegenüberliegenden Seitenwänden des Innengehäuses 30 jeweils ein Bolzen angeformt ist, welcher in jeweils eine Bolzenaufnahme 31 eingreift. Die Bolzen sind in einer Linie zueinander ausgerichtet, sodass diese eine Schwenkachse des Innengehäuses 30 definieren, welche parallel zur Bodenwandung 14 ausgerichtet ist.

Darüber hinaus weist das Verbindungselement 18 der Anbindungsanordnung 12 einen Kabelkanal auf, durch welchen ein Sensorkabel 32 aus dem Außengehäuse 29 führbar ist. Der Kabelkanal ist durch das Verbindungselement 18 und durch die Bodenwandung 14 reichend sowie zylinderförmig ausgebildet. Damit das Sensorkabel 32 seitlich in den Kabelkanal gedrückt werden kann, ist der Kabelkanal seitlich geöffnet bzw. im Querschnitt C-förmig ausgebildet. Da der Kabelkanal durch das Verbindungselement 18 reicht, ist es möglich, das Sensorkabel 32 durch die erste Ausnehmung 8 der Ausnehmungen 8 in den Innenraum des Rahmenprofils 3a, 3b zu führen.

Aufgrund geringerer Belastungen auf die Sensorhalterung 11 als auf die Seitenführungshalterung 6 ist es nicht erforderlich, dass der Basiskörper mehrere Stützwände und/oder das Verbindungselement 18 ein Versteifungselement 19 aufweisen.

Um eine Neigung des Innengehäuses 30 und somit des darin aufgenommenen Sensors 10 relativ zur Förderebene FE einzustellen, weist die Sensorhalterung 11 eine Verstellvorrichtung auf, welche über eine Betätigungsöffnung 33 in der Deckenwandung 15 und/oder in der Bodenwandung 14 zugänglich und betätigbar ist.

Fig. 8 zeigt einen Querschnitt entlang der in Fig. 7 dargestellten Linie VIII-VIII durch die Sensorhalterung 11, wobei die Verstellvorrichtung innerhalb des Außengehäuses 29 ersichtlich ist.

Die Verstellvorrichtung umfasst eine Stellschraube 34 und eine mit dieser zusammenwirkende Verzahnung 35, welche am Innengehäuse 30 angeordnet ist. Im gezeigten Beispiel ist die Stellschraube 34 orthogonal zur Bodenwandung 14 ausgerichtet und die Verzahnung 35 um die Schwenkachse des Innengehäuses 30 gekrümmt. Durch ein Betätigen bzw. Drehen der Stellschraube 34 kann das Innengehäuse 30 und somit der Sensor 10 um die Schwenkachse geschwenkt werden, wie durch den Doppelpfeil angedeutet. Die Stellschraube 34 kann durch die Betätigungsöffnung 33 in der Deckenwandung 15 beispielsweise mit einem Schraubenzieher betätigt werden.

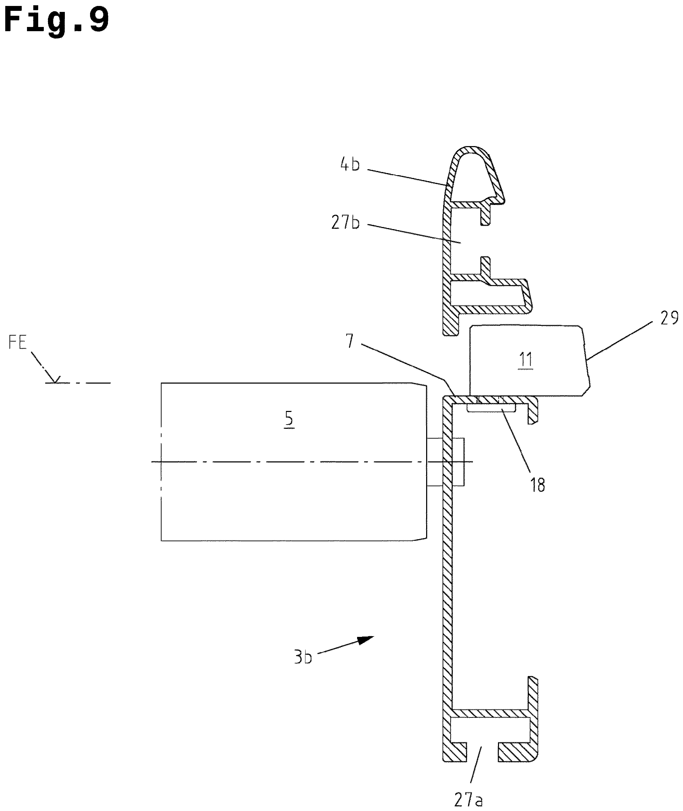

Fig. 9 zeigt einen Querschnitt durch die Fördervorrichtung 1 entlang der Linie IX-IX in Fig. 1. Hierbei ist die Sensorhalterung 11 am Montageschenkel 7 des zweiten Rahmenprofils 3b befestigt, sodass das Außengehäuse 29 im Wesentlichen zwischen dem zweiten Rahmenprofil 3b und dem zweiten Seitenführungsprofil 4b positioniert ist. Selbstverständlich kann die Sensorhalterung 11 in analoger Weise am ersten Rahmenprofil 3a befestigt sein.

Das Seitenführungsprofil 4a, 4b ist hierbei, ebenso wie in Fig. 5, so angeordnet, dass ein Vertikalabstand zwischen dem Montageschenkel 7 und einer Unterkante des Seitenführungsprofils 4a, 4b bzw. einer Tangentialebene durch die Unterkante des Seitenführungsprofils 4a, 4b bereitgestellt ist. Der Vertikalabstand ermöglicht eine optische Verbindung des Sensors 10 zum Förderbereich.

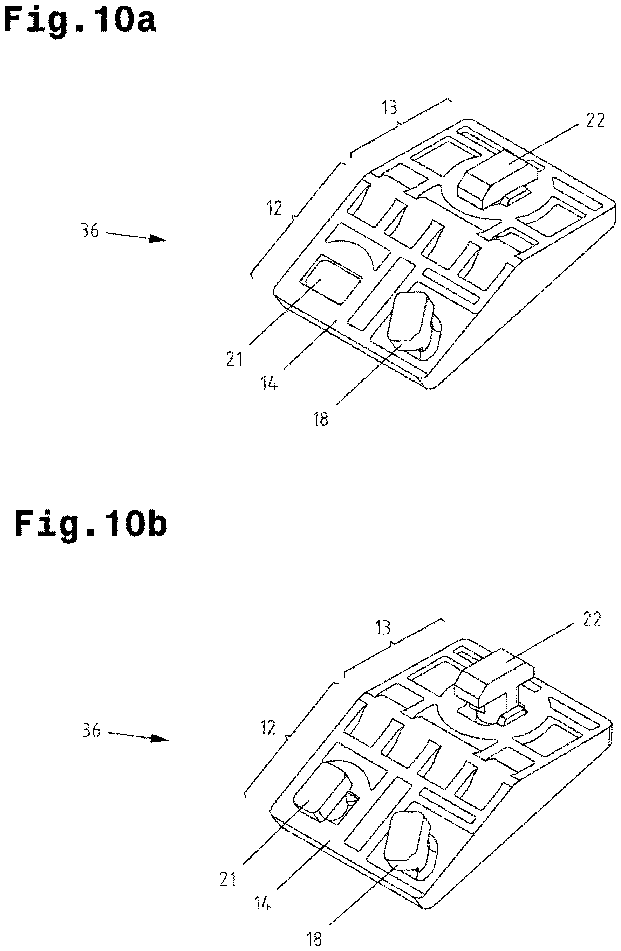

In Fig. 10a ist ein eine perspektivische Darstellung einer Abdeckungshalterung 36 gezeigt, mit welcher eine Abdeckung 37, insbesondere eine Unterseitenabdeckung für die Fördervorrichtung 1, am Rahmenprofil 3a, 3b fixiert werden kann. Die Abdeckungshalterung 36 weist eine weitere Ausführungsform der Anbindungsanordnung 12 auf. Ebenso, wie in den bisher gezeigten Beispielen, umfasst die Montageaufnahme 13 ein Verbindungsmittel 22, welches als Hammerkopfschraube ausgebildet ist.

Der Basiskörper weist eine Bodenwandung 14 auf, an welcher das Verbindungselement 18 angeordnet ist. Das Verbindungselement 18 ist analog zu den bisher gezeigten Ausführungsbeispielen der Anbindungsanordnung 12 ausgebildet. Für die Abdeckungshalterung 36 ist das Versteifungselement 19 nicht zwingend erforderlich.

Die Verriegelungsvorrichtung umfasst in dieser Variante eine Vertiefung in der Bodenwandung 14. Das Verriegelungselement 21 ist orthogonal zur Bodenwandung 14 verschiebbar in der Vertiefung angeordnet, sodass das Verriegelungselement 21 aus der Vertiefung herausbewegbar ist. Überdies ist das Verriegelungselement 21 um eine Verriegelungsachse drehbar gelagert. Die Verriegelungsdrehachse ist orthogonal zur Bodenwandung 14 ausgerichtet. Hierbei ist vorgesehen, dass das Verriegelungselement 21 bündig mit der Bodenwandung 14 abschließt oder von der Bodenwandung 14 rückspringend angeordnet ist, wenn das Verriegelungselement 21 innerhalb der Vertiefung positioniert ist.

Fig. 10b zeigt die Anbindungsanordnung 12 aus Fig. 10a wobei das Verriegelungselement 21 aus der Vertiefung herausbewegt und um 90° gedreht ist. Das Verriegelungselement 21 ist hierbei, wie zuvor für das Verbindungselement 18 beschrieben, mit einem hammerförmigen Kopf ausgebildet.

Die Montageaufnahme 13 und der Basiskörper der in Fig. 10a und Fig. 10b gezeigten Abdeckungshalterung 36 sind starr verbunden bzw. einstückig ausgebildet.

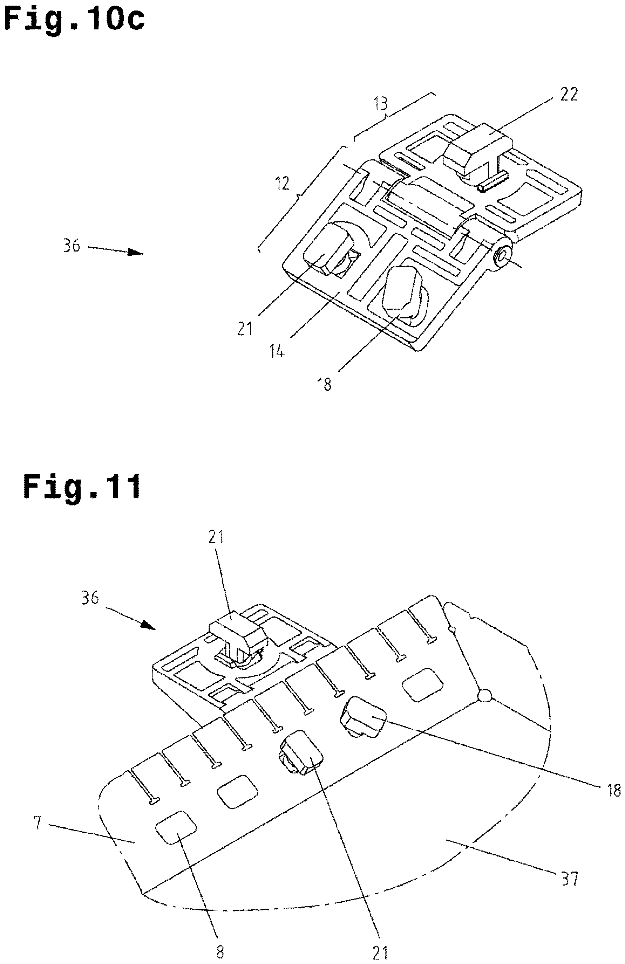

In Fig. 10c ist eine alternative Ausführungsform der Abdeckungshalterung 36 gezeigt, bei welcher die Montageaufnahme 13 und der Basiskörper schwenkbar, insbesondere über ein Scharnier, gelenkig miteinander verbunden sind. Dadurch kann die Abdeckung 37 schwenkbar am Rahmenprofil 3a, 3b befestigt sein.

Eine Befestigung der Anbindungsanordnung 12 bzw. der Abdeckungshalterung 36 an einem Montageschenkel 7 erfolgt im Wesentlichen wie in Fig. 3a und Fig. 3b gezeigt und zuvor beschrieben.

Zur Befestigung wird die Abdeckungshalterung 36 bzw. die Anbindungsanordnung 12 zunächst, wie in Fig. 3a gezeigt, in die Anbindungsposition 24 gebracht, in welcher der Kopf des Verbindungselementes 18 durch die erste Ausnehmung 8 der Ausnehmungen 8 des Montageschenkels 7 geführt wird. Anschließend wird die Anbindungsanordnung 12 um den Drehwinkel α in die Montageposition 25 gedreht.

In der Montageposition 25 der Anbindungsanordnung 12, wie in Fig. 11 ersichtlich, kann nun das Verriegelungselement 21 aus der Vertiefung heraus bewegt und, analog zum Verbindungselement 18, mit der zweiten Ausnehmung 8 der Ausnehmungen 8 in Eingriff gebracht werden. Hierbei wird ein Kopf des Verriegelungselementes 21 durch die zweite Ausnehmung 8 der Ausnehmungen 8 geführt.

Anschließend kann das Verriegelungselement 21, insbesondere um 90°, gedreht werden, sodass der hammerförmige Kopf des Verriegelungselementes 21 in gleicher Weise wie der Kopf der Verbindungselementes 18 den Montageschenkel 7 in einem Randbereich der zweiten Ausnehmung 8 hintergreift. Dies ist in Fig. 11 gezeigt.

Der Montageschenkel 7 ist hierbei an einer Abdeckung 37 angeordnet. Ein erster Randabschnitt der Abdeckung 37 und ein zweiter Randabschnitt der Abdeckung 37 bilden jeweils einen Montageschenkel 7 aus. Die Abdeckung 37 kann beispielsweise als Unterseitenabdeckung einer Fördervorrichtung 1 ausgebildet sein, welche über die Abdeckungshalterung 36 am weiteren Schenkel bzw. an einem Abdeckungsschenkel des Rahmenprofils 3a, 3b befestigt ist.

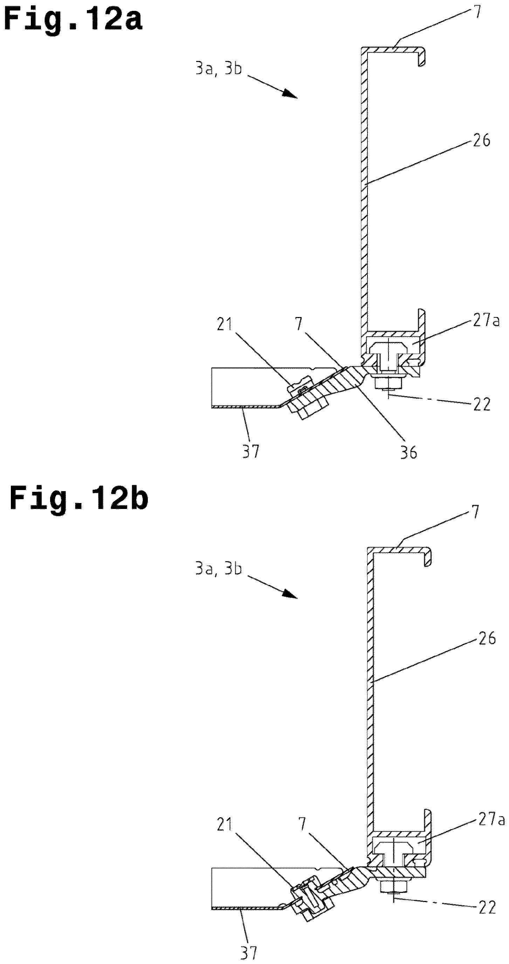

Fig. 12a zeigt einen Querschnitt durch die Abdeckungshalterung 36, mit welcher die Abdeckung 37 am Rahmenprofil 3a, 3b befestigt ist. Die Abdeckung 37 bzw. der Montageschenkel 7 der Abdeckung 37 ist mittels der Anbindungsanordnung 12 an der Abdeckungshalterung 36 befestigt. Das Verbindungsmittel 22 der Abdeckungshalterung 36 ist in die Befestigungsnut 27a am weiteren Schenkel bzw. am Abdeckungsschenkel des Rahmenprofils 3a, 3b eingeführt und wirkt mit dieser zusammen, um die Abdeckungshalterung 36 am Rahmenprofil 3a, 3b zu befestigen.

In Fig. 12b ist ein weiterer Querschnitt durch die Abdeckungshalterung 36 in einer Ebene durch das Verriegelungselement 21 gezeigt, welches drehbar und verschiebbar am Basiskörper der Anbindungsanordnung 12 gelagert ist.

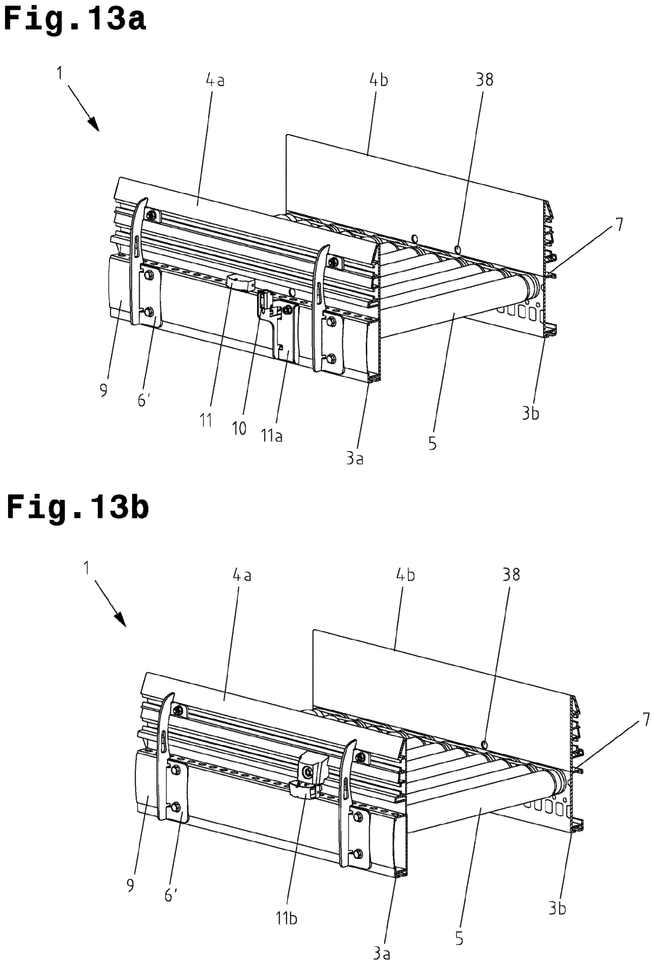

In Fig. 13a ist ein Abschnitt einer Fördervorrichtung 1 in perspektivischer Darstellung gezeigt. Die Fördervorrichtung 1 ist im Wesentlichen analog zur in Fig. 1 gezeigten Fördervorrichtung 1 aufgebaut.

Im gezeigten Beispiel verlaufen ein erstes Rahmenprofil 3a und ein zweites Rahmenprofil 3b mit gegenseitigem Abstand parallel zueinander in einer Förderrichtung des (nicht eingetragenen) Stückguts 2.

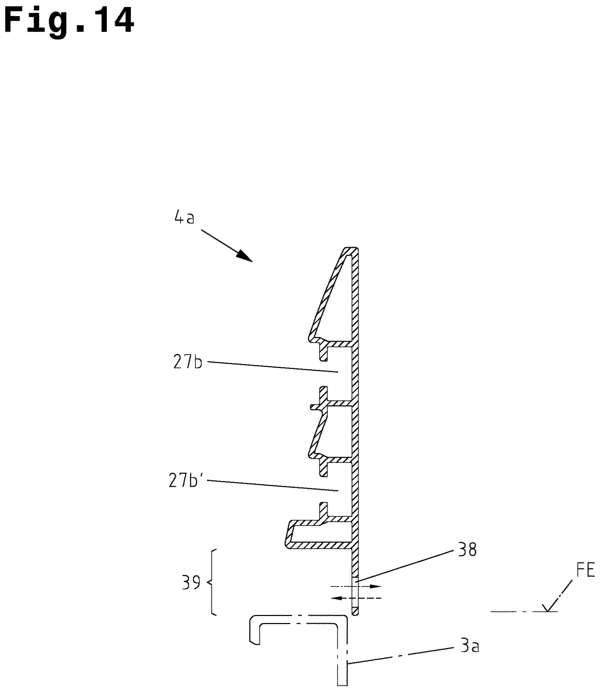

Zwischen dem ersten Rahmenprofil 3a und dem zweiten Rahmenprofil 3b ist eine Vielzahl von Förderelementen 5 angeordnet, welche eine Förderebene FE (Fig. 14) definieren.

Hierbei sind die Förderelemente 5 als Förderrollen ausgebildet. Alternativ dazu kann beispielsweise vorgesehen sein, dass die Förderelemente 5 als Fördergurte ausgebildet sind oder ein Förderelement 5 vorgesehen ist, welches als Fördergurt ausgebildet ist. Auch kann ein Fördergurt um Förderrollen geführt werden, sodass das Förderelement 5 durch den Fördergurt gebildet ist.

Das Stückgut 2 wird auf der Förderebene FE bzw. in einem Förderbereich transportiert, welcher seitlich durch die Seitenführungsprofile 4a, 4b bzw. durch einander zugewandte Innen- oder Führungsseiten der Seitenführungsprofile 4a, 4b und nach unten durch die Förderebene FE begrenzt ist.

Um den Förderbereich seitlich zu begrenzen, verlaufen ein erstes Seitenführungsprofil 4a und ein zweites Seitenführungsprofil 4b ebenfalls mit gegenseitigem Abstand parallel zueinander und in Förderrichtung des Stückguts 2.

Das erste Seitenführungsprofil 4a ist am ersten Rahmenprofil 3a und das zweite Seitenführungsprofil 4b am zweiten Rahmenprofil 3b montiert. Die Seitenführungsprofile 4a, 4b sind jeweils mittels Seitenführungshalterungen am korrespondierenden Rahmenprofil 3a, 3b befestigt. Bei der dargestellten Ausführungsform sind die Seitenführungsprofile 4a, 4b über zu den oben beschriebenen Seitenführungshalterungen alternative Seitenführungshalterungen 6' montiert, welche seitlich am Rahmenprofil 3a, 3b befestigt sind. Grundsätzlich wäre es aber auch denkbar, Seitenführungshalterungen mit der oben beschriebenen Anbindungsanordnung 12 zu verwenden.

Im dargestellten Beispiel sind Seitenführungsprofile 4a, 4b vorgesehen, welche im Wesentlichen unmittelbar an das jeweilige Rahmenprofil 3a, 3b anschließen. Dadurch ist die Fördervorrichtung 1 für den Transport von Stückgütern 2 geeignet, welche in sogenannten Polybags verpackt sind.

Darüber hinaus weisen die Seitenführungsprofile 4a, 4b jeweils eine Führungsseite und eine Montageseite auf. Bei der gezeigten Fördervorrichtung 1 sind die Seitenführungsprofile 4a, 4b so angeordnet, dass deren Führungsseiten einander bzw. dem Förderbereich zugewandt sind. Die Montageseite des ersten Seitenführungsprofils 4a und die Montageseite des zweiten Seitenführungsprofils 4b sind voneinander bzw. vom Förderbereich abgewandt. Überdies sind die Seitenführungsprofile 4a, 4b jeweils an der Montageseite mit den Seitenführungshalterungen 6' verbunden.

Die Rahmenprofile 3a, 3b weisen im Wesentlichen einen C-förmigen Querschnitt auf, wobei eine Seitenabdeckung 9 zum Verschließen bzw. Abdecken einer offenen Seite des C-förmigen Querschnittes. Somit wird ein durch das Rahmenprofil 3a, 3b und die Seitenabdeckung 9 begrenzter Innenraum des Rahmenprofils 3a, 3b bereitgestellt. In den Fig. 13a, 13b ist das erste Rahmenprofil 3a mit der Seitenabdeckung 9 und das zweite Rahmenprofil 3b ohne Seitenabdeckung 9 dargestellt.

Zur Aufnahme von Halterungen weisen die Rahmenprofile 3a, 3b jeweils einen Montageschenkel 7 auf, welcher eine Vielzahl von beabstandet zueinander angeordneter Ausnehmungen 8 umfasst, wie oben beschrieben.

Zur Detektion von transportiertem Stückgut 2 weist die Fördervorrichtung 1 eine oder mehrere Lichtschranken, insbesondere Reflexionslichtschranken, auf. Im dargestellten Abschnitt der Fördervorrichtung 1 sind zwei Lichtschranken angeordnet. Selbstverständlich können in nicht gezeigten Abschnitten weitere Lichtschranken und/oder zusätzliche Sensoren 10 angeordnet sein.

Eine derartige Lichtschranke umfasst einen Sensor 10 und einen zum Sensor 10 korrespondierenden Lichtreflektor, welcher in den Fig. 13a, 13b nicht dargestellt ist. Der Sensor 10 ist jeweils am ersten Rahmenprofil 3a befestigt. Der Lichtreflektor ist dem Sensor 10 gegenüberliegend am zweiten Rahmenprofil 3b oder am zweiten Seitenführungsprofil 4b montiert.

Im dargestellten Beispiel ist ein (nicht ersichtlicher) Sensor 10 einer ersten Lichtschranke mittels einer ersten Sensorhalterung 11 befestigt, die eine zuvor beschriebene Anbindungsanordnung 12 aufweist. Ein dargestellter Sensor 10 einer zweiten Lichtschranke ist mittels einer alternativen Sensorhalterung 11a montiert, welche seitlich am Rahmenprofil 3a, 3b befestigt ist. In der Regel können Sensoren 10 wahlweise mittels der ersten Sensorhalterung 11 oder der alternativen Sensorhalterung 11a montiert sein.

In einer in Fig. 13b dargestellten Variante kann der (nicht ersichtliche) Sensor 10 mittels einer weiteren alternativen Sensorhalterung 11b montiert sein, welche am ersten Seitenführungsprofil 4a befestigt ist. Die weitere alternative Sensorhalterung 11b weist ein Außengehäuse 29 und ein Innengehäuse 30 zur Aufnahme des Sensors 10 auf, wie in Fig. 7 und Fig. 8 gezeigt.

Das Innengehäuse 30 ist (wie zuvor zu Fig. 7 und Fig. 8 beschrieben) schwenkbar am Außengehäuse 29 gelagert. Eine Neigung des Innengehäuses 30 bzw. des Sensors 10 kann mittels einer zuvor zu Fig. 7 und Fig. 8 beschriebenen Verstellvorrichtung eingestellt werden. Im Unterschied zur in Fig.8 gezeigten Ausführung weist das in Fig. 13b dargestellte Außengehäuse 29 kein Verbindungselement 18 sowie kein Verriegelungselement 21 auf.

Darüber hinaus umfasst die Sensorhalterung 11b eine alternative Anbindungsanordnung mit einem Befestigungsmittel bzw. Klemmmittel, welches mit der in Fig. 14 eingetragenen oberen Befestigungsnut 27b oder der unteren Befestigungsnut 27b `, wie dies in Fig. 13b gezeigt ist, zusammenwirkt. Die alternative Anbindungsanordnung kann im Wesentlichen analog zum Montageabschnitt 13 der Seitenführungshalterung 6 ausgebildet sein.

Der Sensor 10 umfasst eine Lichtquelle bzw. einen Lichtsender zur Bereitstellung eines abgestrahlten Lichtstrahls (siehe Pfeil in voller Linie in Fig. 14) und einen Lichtempfänger zur Erfassung eines Lichtstrahls. Bei der gezeigten Lichtschranke wird der abgestrahlte Lichtstrahl von der Lichtquelle zum Lichtreflektor geführt, wobei der abgestrahlte Lichtstrahl den Förderbereich durchquert. Ein am Lichtreflektor reflektierter Lichtstrahl (siehe Pfeil in gestrichelter Linie in Fig. 14) wird vom Lichtreflektor zum Lichtempfänger geführt, wobei der reflektierte Lichtstahl den Förderbereich durchquert.

Um ein Durchführen des abgestrahlten Lichtstrahls und/oder des reflektierten Lichtstrahls zu ermöglichen, weisen das erste Seitenführungsprofil 4a eine erste Durchgangsöffnung 38 und das zweite Seitenführungsprofil 4b eine zweite Durchgangsöffnung 38 auf, welche eine sensorseitige Lochblende und eine reflektorseitige Lochblende bereitstellen. Hierbei ist vorgesehen, dass jedem Sensor 10 und/oder jedem Reflektor eine Lochblende der Lochblenden zugeordnet ist.

Darüber hinaus ist der Sensor 10 über eine Verstellvorrichtung relativ zur sensorseitigen Lochblende einstellbar, sodass ein Winkel zwischen einer Mittelachse der Durchgangsöffnung 38 und dem abgestrahlten Lichtstrahl eingestellt werden kann. Ferner ist vorgesehen, dass der Sensor 10 relativ zur Durchgangsöffnung 38 positioniert ist, sodass ein Teil des Lichtstrahls von der Durchgangsöffnung 38 abgeschnitten wird. Hierbei verläuft der Lichtstrahl versetzt zur Mittelachse der Durchgangsöffnung 38. Der Lichtreflektor kann in gleicher Art und Weise einstellbar sein, sodass ein Winkel zwischen einer Mittelachse der zweiten Durchgangsöffnung 38 und dem reflektierten Lichtstrahl eingestellt werden kann.

In Fig. 14 ist ein Querschnitt durch das erste Seitenführungsprofil 4a und schematisch angedeutet das erste Rahmenprofil 3a der alternativen Fördervorrichtung 1 dargestellt, welches eine erste bzw. obere Befestigungsnut 27b und eine zweite bzw. untere Befestigungsnut 27b` aufweist. Das erste Seitenführungsprofil 4a weist somit eine, im Vergleich zum in Fig. 5 und Fig. 9 im Querschnitt gezeigten Seitenführungsprofil, größere Höhe bzw. einen größeren Abstand zwischen einer Unterkante und einer Oberkante des Seitenführungsprofils 4a auf. Dadurch kann ein Spalt bzw. Vertikalabstand zwischen dem Seitenführungsprofil 4a und dem Rahmenprofil 3a, 3b geschlossen bzw. reduziert werden. Das zweite Seitenführungsprofil 4b kann in gleicher Weise ausgebildet und analog am zweiten Rahmenprofil 3b angeordnet sein.

Die Seitenführungsprofile 4a, 4b können so angeordnet sein, dass eine Unterkante des jeweiligen Seitenführungsprofils 4a, 4b unterhalb der Förderebene FE verläuft, wie in Fig. 14 dargestellt. In anderen Worten kann die Förderebene FE, insbesondere geringfügig, oberhalb zu einer Unterkante des Seitenführungsprofils 4a, 4b verlaufen, wie in Fig. 14 eingetragen.

Zur Befestigung dieses Seitenführungsprofils 4a, 4b greift die Seitenführungshalterung 6' in die obere Befestigungsnut 27b ein, wie in den Fig. 13a, 13b ersichtlich ist. An einem unteren Ende weist das Seitenführungsprofil 4a, 4b eine Schürze 39 auf, um einen Spalt bzw. Vertikalabstand zwischen dem Seitenführungsprofil 4a, 4b und dem Rahmenprofil 3a, 3b, wie dieser in Fig. 1 ersichtlich ist, zu schließen bzw. zu verdecken, wie dies in Fig. 14 dargestellt ist.

Die Durchgangsöffnung 38 ist in der Schürze 39 angeordnet, um den abgestrahlten Lichtstrahl und/oder den reflektierten Lichtstrahl knapp oberhalb der Förderebene FE in den Förderbereich zu führen. Hierbei kann die Durchgangsöffnung 38 bzw. die Lochblende gebohrt oder gestanzt sein.

Abschließend sei noch erwähnt, dass mit der beschriebenen Anbindungsanordnung 12 eine robuste und verriegelbare Verbindungsvorrichtung realisiert werden kann, mit welcher diverse Halterungen für Fördervorrichtungskomponenten, wie Seitenführungsprofile 4a, 4b, Verbindungselemente 18, Sensoren 10, Reflektoren, Abdeckungen 37, insbesondere Unterseitenabdeckungen, und dergleichen, am Rahmenprofil 3a, 3b der Fördervorrichtung 1 befestigt werden können. Solche Halterungen können demnach beispielsweise als Seitenführungshalterungen 6, Sensorhalterungen 11 und Abdeckungshalterungen 36 ausgeführt sein.

Die erfindungsgemäße Verbindungseinrichtung ist somit universell und in einer einfachen Art und Weise einsetzbar und vereinfacht die Montagearbeiten an der Fördervorrichtung 1. Ferner kann mittels der Durchgangsöffnung 38 ein Einsatzgebiet der Fördervorrichtung 1 erweitert werden.

Abschließend wird auch festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

**Bezugszeichenaufstellung**

| | | | |
|---|---|---|---|
| 1 | Fördervorrichtung | 20 | Federelement |
| 2 | Stückgut | 21 | Verriegelungselement |
| 3a, 3b | Rahmenprofil | 22 | Verbindungsmittel |
| 4a, 4b | Seitenführungsprofil | 23 | Stützrippen |
| 5 | Förderelement | 24 | Anbindungsposition |
| 6, 6' | Seitenführungshalterung | 25 | Montageposition |
| 7 | Montageschenkel | 26 | Profilschenkel |
| 8 | Ausnehmung | 27 | Befestigungsnut |
| 9 | Seitenabdeckung | 28 | Montageöffnung |
| 10 | Sensor | 29 | Außengehäuse |
| 11 | Sensorhalterung | 30 | Innengehäuse |
| 11a, 11b | alternative Sensorhalterungen | 31 | Bolzenaufnahme |
| | | 32 | Sensorkabel |
| 12 | Anbindungsanordnung | 33 | Betätigungsöffnung |
| 13 | Montageaufnahme | 34 | Stellschraube |
| 14 | Bodenwandung | 35 | Verzahnung |
| 15 | Deckenwandung | 36 | Abdeckungshalterung |
| 16 | Seitenwandung | 37 | Abdeckung |
| 17 | Stützwandung | 38 | Durchgangsöffnung |
| 18 | Verbindungselement | 39 | Schürze |
| 19 | Versteifungselement | α | Drehwinkel |

## Patentansprüche

1. Fördervorrichtung (1) zum Transport von Stückgut (2), umfassend eine Vielzahl von Rahmenprofilen (3a, 3b), zumindest ein Förderelement (5) und eine Vielzahl von Seitenführungsprofilen (4a, 4b), wobei ein erstes Rahmenprofil (3a) der Rahmenprofile (3a, 3b) und ein zweites Rahmenprofil (3b) der Rahmenprofile (3a, 3b) mit gegenseitigem Abstand parallel zueinander und in Förderrichtung des Stückguts (2) verlaufen, und wobei das Förderelement (5) zwischen dem ersten Rahmenprofil (3a) und dem zweiten Rahmenprofil (3b) angeordnet ist und eine Förderebene (FE) definiert, auf welcher das Stückgut (2) transportiert werden kann, und wobei ein erstes Seitenführungsprofil (4a) der Seitenführungsprofile (4a, 4b) und ein zweites Seitenführungsprofil (4b) der Seitenführungsprofile (4a, 4b) mit gegenseitigem Abstand parallel zueinander und in Förderrichtung des Stückguts (2) verlaufen, und wobei das erste Seitenführungsprofil (4a) am ersten Rahmenprofil (3a) und das zweite Seitenführungsprofil (4b) am zweiten Rahmenprofil (3b) jeweils über eine Vielzahl von Seitenführungshalterungen (6, 6') montiert sind, sodass ein Förderbereich seitlich durch das erste Seitenführungsprofil (4a) und das zweite Seitenführungsprofil (4b) begrenzt ist, und wobei ein Sensor (10) am ersten Rahmenprofil (3a) oder am ersten Seitenführungsprofil (4a) befestigt ist, welcher eine Lichtquelle zur Bereitstellung eines abgestrahlten Lichtstrahls aufweist, **dadurch gekennzeichnet, dass** das erste Seitenführungsprofil (4a) eine erste Durchgangsöffnung (38) aufweist, durch welche der abgestrahlte Lichtstrahl in den Förderbereich führbar ist und welche eine sensorseitige Lochblende für den abgestrahlten Lichtstrahl bereitstellt.

2. Fördervorrichtung (1) nach Anspruch 1, **dadurch gekennzeichnet, dass** die Fördervorrichtung (1) eine Lichtschranke aufweist, welche den Sensor (10) und einen zum Sensor (10) korrespondierenden Lichtreflektor umfasst, wobei der Sensor (10) einen Lichtempfänger aufweist und der Lichtreflektor auf einer dem Sensor (10) gegenüberliegenden Seite des Förderbereichs positioniert ist, sodass der abgestrahlte Lichtstrahl am Lichtreflektor reflektierbar und ein reflektierter Lichtstrahlt vom Lichtreflektor zum Lichtempfänger führbar ist.

3. Fördervorrichtung (1) nach Anspruch 2, **dadurch gekennzeichnet, dass** das zweite Seitenführungsprofil (4b) eine zweite Durchgangsöffnung (38) aufweist, durch welche der abgestrahlte Lichtstrahl zum Lichtreflektor und der reflektierte Lichtstrahl in den Förderbereich führbar ist und welche eine reflektorseitige Lochblende für den abgestrahlten Lichtstrahl und/oder den reflektierten Lichtstrahl bereitstellt.

4. Fördervorrichtung (1) nach einem der Ansprüche 1 bis 3, **dadurch gekennzeichnet, dass** der Sensor (10) über eine Verstellvorrichtung relativ zur ersten Durchgangsöffnung (38) einstellbar ist, sodass die Durchgangsöffnung (38) einen Teil des abgestrahlten Lichtstrahls abschneidet.

5. Fördervorrichtung (1) nach Anspruch 3 oder 4, **dadurch gekennzeichnet, dass** der Lichtreflektor über eine weitere Verstellvorrichtung relativ zur zweiten Durchgangsöffnung (38) einstellbar ist, sodass die Durchgangsöffnung (38) einen Teil des reflektierten Lichtstrahls abschneidet.

6. Fördervorrichtung (1) nach einem der Ansprüche 1 bis 5, **dadurch gekennzeichnet, dass** eine Lichtachse des abgestrahlten Lichtstrahls versetzt und/oder geneigt gegenüber einer Mittelachse der ersten Durchgangsöffnung (38) verläuft.

7. Fördervorrichtung (1) nach einem der Ansprüche 1 bis 6, **dadurch gekennzeichnet, dass** eine Lichtachse des reflektierten Lichtstrahls versetzt und/oder geneigt gegenüber einer Mittelachse der zweiten Durchgangsöffnung (38) verläuft.

8. Fördervorrichtung (1) nach einem der Ansprüche 1 bis 7, **dadurch gekennzeichnet, dass** zumindest eine Seitenführungshalterung (6) der Seitenführungshalterungen (6) an einem korrespondierenden Rahmenprofil (3a, 3b) der Rahmenprofile (3a, 3b) über eine Verbindungsvorrichtung befestigt ist, welche eine Anbindungsanordnung (12) und einen mit dieser zusammenwirkenden Montageschenkel (7) umfasst, welcher am korrespondierenden Rahmenprofil (3a, 3b) der Rahmenprofile (3a, 3b) angeordnet ist und eine Vielzahl von in Längsrichtung des Montageschenkels (7) beabstandet zueinander angeordneter Ausnehmungen (8) aufweist,
wobei die Anbindungsanordnung (12) an der Seitenführungshalterung (6) angeordnet und mit dem zusammenwirkenden Montageschenkel (7) verbindbar ist,
wobei die Anbindungsanordnung (12) einen Basiskörper aufweist, welcher eine Bodenwandung (14), ein Verbindungselement (18) und eine Verriegelungsvorrichtung umfasst, wobei die Bodenwandung (14) eine Montagefläche bereitstellt und das Verbindungselement (18) von der Montagefläche vorragend angeordnet und in einer Anbindungsposition (24) der Anbindungsanordnung (12) mit einer ersten Ausnehmung (8) der Ausnehmungen (8) in Eingriff bringbar ist, wobei das Verbindungselement (18) eine orthogonal auf die Montagefläche ausgerichtete Montagedrehachse ausbildet, um welche die Anbindungsanordnung (12) aus der Anbindungsposition (24) in eine Montageposition (25) drehbar ist, wobei die Verriegelungsvorrichtung ein Verriegelungselement (21) aufweist, welches senkrecht zur Montagefläche bewegbar ist, um in eine zweite Ausnehmung (8) der Ausnehmungen (8) einzugreifen, und welches beabstandet zum Verbindungselement (18) angeordnet ist, sodass das Verriegelungselement (21) der Verriegelungsvorrichtung in der Montageposition (25) der Anbindungsanordnung (12) mit der zweiten Ausnehmung (8) der Ausnehmungen (8) des Montageschenkels (7) in Eingriff bringbar ist.

9. Fördervorrichtung (1) nach einem der Ansprüche 1 bis 7, **dadurch gekennzeichnet**, das s
zusätzlich eine Abdeckung (37) an einer Unterseite der Fördervorrichtung (1) vorgesehen ist,
wobei die Abdeckung (37) unterhalb des zumindest einen Förderelementes (5) zwischen dem ersten Rahmenprofil (3a) und dem zweiten Rahmenprofil (3b) angeordnet und in Förderrichtung des Stückguts (2) verläuft und entlang eines ersten Randabschnitts der Abdeckung (37) über eine Vielzahl von Abdeckungshalterungen (36) am ersten Rahmenprofil (3a) und entlang eines zweiten Randabschnitts der Abdeckung (37) über eine Vielzahl von Abdeckungshalterungen (36) am zweiten Rahmenprofil (3b) befestigt ist,
wobei zumindest eine Abdeckungshalterung (36) der Abdeckungshalterungen (36) eine Anbindungsanordnung (12) aufweist und über eine Verbindungsvorrichtung mit der Abdeckung (37) verbindbar ist,
wobei der erste Randabschnitt der Abdeckung (37) und der zweite Randabschnitt der Abdeckung (37) jeweils einen Montageschenkel (7) ausbilden,
wobei der Montageschenkel (7) an der Abdeckung (37) angeordnet ist und eine Vielzahl von in Längsrichtung des Montageschenkels (7) beabstandet zueinander angeordneter Ausnehmungen (8) aufweist,
wobei die Anbindungsanordnung (12) einen Basiskörper aufweist, welcher eine Bodenwandung (14), ein Verbindungselement (18) und eine Verriegelungsvorrichtung umfasst, wobei die Bodenwandung (14) eine Montagefläche bereitstellt und das Verbindungselement (18) von der Montagefläche vorragend angeordnet und in einer Anbindungsposition (24) der Anbindungsanordnung (12) mit einer ersten Ausnehmung (8) der Ausnehmungen (8) in Eingriff bringbar ist, wobei das Verbindungselement (18) eine orthogonal auf die Montagefläche ausgerichtete Montagedrehachse ausbildet, um welche die Anbindungsanordnung (12) aus der Anbindungsposition (24) in eine Montageposition (25) drehbar ist, wobei die Verriegelungsvorrichtung ein Verriegelungselement (21) aufweist, welches senkrecht zur Montagefläche bewegbar ist, um in eine zweite Ausnehmung (8) der Ausnehmungen (8) einzugreifen, und beabstandet zum Verbindungselement (18) angeordnet ist, sodass das Verriegelungselement (21) der Verriegelungsvorrichtung in der Montageposition (25) der Anbindungsanordnung (12) mit der zweiten Ausnehmung (8) der Ausnehmungen (8) des Montageschenkels (7) in Eingriff bringbar ist.
